# EUROPÄISCHE PATENTSCHRIFT

(11) **EP 2 393 689 B1**
(45) Veröffentlichungstag und Bekanntmachung des Hinweises auf die Patenterteilung: **28.11.2012**
(21) Anmeldenummer: 10701539.8
(22) Anmeldetag: 29.01.2010
(51) Int. Cl.: B60W 40/072, B60W 40/076, B60K 6/48, B60L 15/20, B60W 10/02, B60W 10/08

(54) **VERFAHREN ZUM BETREIBEN EINES ANTRIEBSSTRANGS**
METHOD FOR OPERATING A DRIVE TRAIN
PROCÉDÉ PERMETTANT DE FAIRE FONCTIONNER UNE CHAÎNE CINÉMATIQUE

(30) Priorität: 09.02.2009 DE 102009000720
(43) Veröffentlichungstag der Anmeldung: 14.12.2011
(73) Patentinhaber: ZF Friedrichshafen AG, 88038 Friedrichshafen (DE)
(72) Erfinder: KALTENBACH, Johannes, 88048 Friedrichshafen (DE)
(86) Internationale Anmeldenummer: PCT/EP2010/051051
(87) Internationale Veröffentlichungsnummer: WO 2010/089246

(56) Entgegenhaltungen:
- EP-A2- 0 731 294
- EP-A2- 1 522 450
- DE-A1-102006 029 366
- GB-A- 2 435 102
- US-A1- 2004 099 454
- US-A1- 2007 112 496

## Beschreibung

Die Erfindung betrifft ein Verfahren zum Betreiben eines Antriebsstrangs eines Kraftfahrzeugs.

Das gattungsbildende Dokument US2004/0099454 offenbart ein Verfahren zum Betreiben eines Antriesbstrangs eines Kraftfahrzeugs mit dem Merkmalen des Oberbegriffs von Anspruch 1.

Die Hauptkomponenten eines Antriebsstrangs eines Kraftfahrzeugs sind ein Antriebsaggregat und ein Getriebe. Das Getriebe wandelt Drehzahlen und Drehmomente und stellt so ein Zugkraftangebot des Antriebsaggregats an einem Abtrieb des Antriebsstrangs bereit. Die hier vorliegende Erfindung betrifft ein Verfahren zum Betreiben eines Antriebsstrangs, dessen Antriebsaggregat zumindest eine elektrische Maschine umfasst. Das erfindungsgemäße Verfahren ist demnach sowohl bei einem reinen Elektrofahrzeug, dessen Antriebsaggregat ausschließlich von einer elektrischen Maschine gebildet wird, sowie bei einem Hybridfahrzeug, dessen Antriebsaggregat von einer elektrischen Maschine und einem Verbrennungsmotor gebildet wird, einsetzbar. Die elektrische Maschine des jeweiligen Antriebsaggregats ist dabei beispielsweise als Drehstrom-Synchronmaschine ausgeführt.

Bei einer Drehstrom-Synchronmaschine entspricht die Drehzahl eines Läufers derselben der Drehzahl eines elektromagnetischen Drehfelds, woraus folgt, dass der Läufer einer solchen Synchronmaschine synchron zum Drehfeld rotiert. Daher verfügt eine Drehstrom-Synchronmaschine, deren Drehfeld mithilfe eines Frequenzumrichters erzeugt wird, über keinen Schlupf. Dann, wenn sich der Läufer der Drehstrom-Synchronmaschine im Stillstand befindet, wird hauptsächlich immer nur eine der drei Phasen der Synchronmaschine bestromt, wobei sich dann eine einseitige Belastung der betroffenen Bauteile der Leistungselektronik im Frequenzumrichter einstellt. Der Frequenzumrichter einer Drehstrom-Synchronmaschine besteht im Wesentlichen aus einem Gleichrichter, der eine Schnittstelle zu einem Gleichstrom-Zwischenkreis bzw. Gleichspannungs-Zwischenkreis darstellt, sowie aus einem Wechselrichter, der aus diesem Gleichstrom-Zwischenkreis bzw. Gleichspannungs-Zwischenkreis gespeist wird.

Der Wechselrichter umfasst Schalttransistoren und erzeugt eine pulsweitenmodulierte Spannung. Die Induktivität der elektrischen Maschine bewirkt eine Glättung des Stroms, wobei die Amplitude der resultierenden Ausgangsspannung und deren Frequenz geregelt werden kann.

Dann, wenn eine Drehstrom-Synchronmaschine stillsteht, ist das von derselben für eine definierte Zeitspanne maximal bereitstellbare Moment geringer als das bei drehender Synchronmaschine der Fall ist, da bei drehender Synchronmaschine die Bauteile der Leistungselektronik im Frequenzumrichter abwechselnd belastet werden. Im Stillstand derselben wird hingegen die Leistungselektronik einseitig belastet, wodurch es zu einer Überhitzung und damit Beschädigung der Leistungselektronik des Frequenzumrichters der Synchronmaschine kommen kann. Dies bereitet beim Anfahren eines Kraftfahrzeugs, dessen Antriebsaggregat als elektrische Maschine eine Drehstrom-Synchronmaschine umfasst, Schwierigkeiten. Es besteht daher Bedarf an einem Verfahren zum Betreiben eines Antriebsstrangs eines Kraftfahrzeugs, mithilfe dessen einerseits ein zuverlässiges Anfahren realisiert werden kann, und mithilfe dessen andererseits eine Überlastung und damit Beschädigung der als Drehstrom-Synchronmaschine ausgebildeten elektrischen Maschine vermieden werden kann.

Hiervon ausgehend liegt der vorliegenden Erfindung das Problem zu Grunde, ein neuartiges Verfahren zum Betreiben eines Antriebsstrangs eines Kraftfahrzeugs zu schaffen.

Dieses Problem wird durch ein Verfahren gemäß Anspruch 1 gelöst. Erfindungsgemäß wird zum Anfahren ein beim Anfahren zu erwartender Fahrwiderstand ermittelt. Dann, wenn der zu erwartende Fahrwiderstand kleiner als ein erster Grenzwert ist, erfolgt das Anfahren bei geschlossenem, getriebeextemem oder getriebeintemem Anfahrelement über die elektrische Maschine aus dem Stillstand desselben heraus.

Dann, wenn der zu erwartende Fahrwiderstand größer als der erste Grenzwert ist, wird zum Anfahren bei geöffnetem, getriebeexternem oder getriebeintemem Anfahrelement die elektrischen Maschine mit einer definierten Maschinendrehzahl im Drehzahlregelbetrieb betrieben und anschließend das getriebeexterne oder getriebeinterne Anfahrelement derart geschlossen, dass dasselbe ein vom Fahrerwunsch abhängiges Anfahrmoment überträgt.

Das erfindungsgemäße Verfahren erlaubt ein sicheres und zuverlässiges Anfahren eines Antriebstrangs eines Kraftfahrzeugs, dessen Antriebsaggregat eine als Synchronmaschine, nämlich einen als Drehstrom-Synchronmaschine, ausgebildete elektrische Maschine umfasst.

Beim Anfahren kann eine Überhitzung bzw. Überlastung und damit Beschädigung der Leistungselektronik die elektrische Maschine vermieden werden.

Bevorzugte Weiterbildungen der Erfindung ergeben sich aus den Unteransprüchen und der nachfolgenden Beschreibung. Ein Ausführungsbeispiel der Erfindung werden, ohne hierauf beschränkt zu sein, an Hand der Zeichnung näher erläutert. Dabei zeigt:
- Fig. 1: eine schematisiertes Antriebsstrangschema eines Kraftfahrzeugs, bei welchem das erfindungsgemäße Verfahren einsetzbar ist;
- Fig. 2: eine weiteres schematisiertes Antriebsstrangschema eines Kraftfahrzeugs, bei welchem das erfindungsgemäße Verfahren einsetzbar ist; und
- Fig. 3: ein Blockschaltbild zur Verdeutlichung eine Aspekts des erfindungsgemäßen Verfahrens.

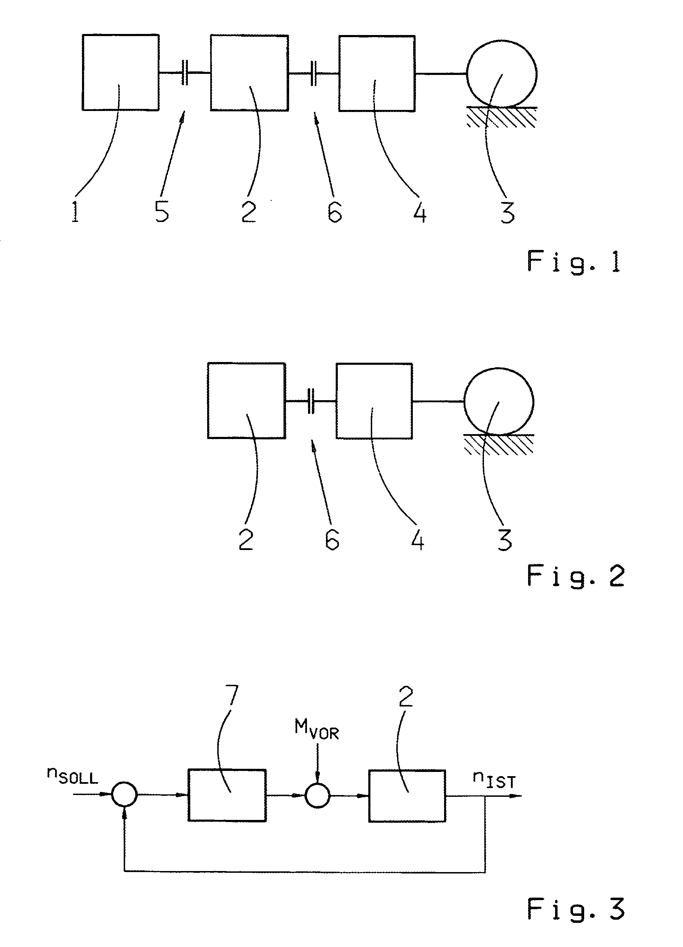

Die hier vorliegende Erfindung betrifft ein Verfahren zum Betreiben eines Antriebsstrangs eines Kraftfahrzeugs, wobei Fig. 1 und 2 jeweils Beispiele von Antriebssträngen zeigen, bei welchen das erfindungsgemäße Verfahren zum Einsatz kommen kann.

So zeigt Fig. 1 stark schematisiert ein Antriebsstrangschema eines sogenannten Parallelhybridantriebs, wobei der Antriebsstrang der Fig. 1 ein Antriebsaggregat mit einem Verbrennungsmotor 1 und einer elektrischen Maschine 2 umfasst. Zwischen das Antriebsaggregat, nämlich zwischen der elektrischen Maschine 2 desselben, und einen Abtrieb 3 ist ein Getriebe 4 geschaltet, wobei das Getriebe 4 vorzugsweise als Automatgetriebe ausgebildet ist.

Gemäß Fig. 1 ist zwischen den Verbrennungsmotor 1 und der elektrischen Maschine 2 des Antriebsstrangs eine Kupplung 5 geschaltet, wobei weiterhin zwischen die elektrische Maschine 2 und das Getriebe 5 eine weitere Kupplung 6 geschaltet ist. Die zwischen der elektrischen Maschine 2 und das Getriebe 4 geschaltete Kupplung 6 stellt ein getriebeexternes Anfahrelement bereit. Anstelle eines solchen getriebeexternen Anfahrelements kann der Antriebsstrang der Fig. 1 auch ein getriebeinternes Anfahrelement umfassen.

Fig. 2 zeigt ein Antriebsstrangschema eines reinen Elektrofahrzeugs, dessen Antriebsaggregat ausschließlich eine elektrische Maschine 2 jedoch keinen Verbrennungsmotor umfasst. In Fig. 2 ist wiederum zwischen die elektrische Maschine 2 und einen Abtrieb 3 ein beliebig ausgeführtes Getriebe 4 geschaltet, wobei zwischen der elektrischen Maschine 2 und das Getriebe 4 wiederum ein getriebeexternes Anfahrelement 6 geschaltet ist.

Anstelle des getriebeexternen Anfahrelements kann der Antriebsstrang der Fig. 2 auch ein getriebeinternes Anfahrelement umfassen.

Wie bereits ausgeführt, kann das erfindungsgemäße Verfahren sowohl beim Antriebsstrang der Fig. 1 eines Hybridfahrzeugs als auch beim Antriebsstrang der Fig. 2 eines reinen Elektrofahrzeugs zum Einsatz kommen, wobei das erfindungsgemäße Verfahren das Anfahren des Antriebsstrangs betrifft. Bei der elektrischen Maschine 2 des jeweiligen Antriebsstrangs handelt es sich jeweils um eine Synchronmaschine, nämlich um eine Drehstrom-Synchronmaschine.

Im Sinne des erfindungsgemäßen Verfahrens wird zum Anfahren des jeweiligen Antriebsstrangs ein beim Anfahren zu erwartender Fahrwiderstand ermittelt. Der beim Anfahren zu erwartende Fahrwiderstand kann dabei messtechnisch mithilfe eines Neigungswinkelsensors ermittelt werden. Alternativ ist es möglich, den zu erwartenden Fahrwiderstand rechnerisch aus einer zurückliegenden Momentenbilanz und/oder Beschleunigungsbilanz des Antriebsstrangs zu ermitteln. Details, mithilfe derer ein Fahrwiderstand ermittelt werden kann, sind dem hier angesprochenen Fachmann geläufig und bedürfen keiner näheren Erläuterung.

Es liegt nun im Sinne der hier vorliegenden Erfindung, den beim Anfahren zu erwartenden Fahrwiderstand, der vorab ermittelt wurde, mit mindestens einem Grenzwert zu vergleichen und abhängig hiervon den Anfahrvorgang zu gestalten.

Dann, wenn der zu erwartende Fahrwiderstand kleiner als ein erster Grenzwert ist, erfolgt das Anfahren des Antriebsstrangs der Fig. 2 bei geschlossenem Anfahrelement 6 über die elektrische Maschine 2 aus dem Stillstand desselben heraus. Dies gilt ebenfalls für den Antriebsstrang der Fig. 1, wobei für den Antriebsstrang der Fig. 1 zusätzlich der Verbrennungsmotor 1 ausgeschaltet und die zwischen den Verbrennungsmotor 1 und die elektrische Maschine 2 geschaltete Kupplung 5 geöffnet ist.

Hierbei wird dann überwacht, ob nach einer definierten Zeitspanne die elektrische Maschine 2 eine Mindestdrehzahl erreicht. Wird hierbei festgestellt, dass diese Mindestdrehzahl nicht erreicht wird, so wird der Anfahrvorgang abgebrochen und es wird ein neuer Anfahrvorgang durchgeführt, und zwar mit solchen Maßnahmen, die dann zum Einsatz kommen, wenn der vorab ermittelte, beim Abfahren zu erwartende Fahrwiderstand größer als der erste Grenzwert ist.

Dann, wenn der zu erwartende Fahrwiderstand größer als der erste Grenzwert ist, wird beim Antriebsstrang der Fig. 2 zum Anfahren bei geöffnetem Anfahrelement 6 die elektrische Maschine 2 mit einer definierten Maschinendrehzahl im Drehzahlregelbetrieb betrieben, wobei die definierte Maschinendrehzahl oberhalb einer Mindestdrehzahl liegt, bei welcher die elektrische Maschine 2 ein maximal möglich bereitstellbares Drehmoment für eine definierte Zeitspanne aufbringen kann. Wie bereits erwähnt, wird hierbei dann die elektrische Maschine 2 im Drehzahlregelbetrieb betrieben. Anschließend an das Anheben der Maschinendrehzahl auf die definierte Maschinendrehzahl wird das Anfahrelement 6 derart geschlossen, dass dasselbe ein vom Fahrerwunsch abhängiges Anfahrmoment überträgt. Dies gilt auch für den Antriebsstrang der Fig. 1, wobei im Antriebsstrang der Fig. 1 hierbei zusätzlich der Verbrennungsmotor 1 ausgeschaltet und die zwischen den Verbrennungsmotor 1 und die elektrische Maschine 2 geschaltete Kupplung 5 geöffnet ist.

Wie bereits ausgeführt, wird dann, wenn der zu erwartende Fahrwiderstand größer als der erste Grenzwert ist, die elektrische Maschine 2 zum Anfahren im Drehzahlregelbetrieb betrieben, wobei sich die Struktur der Drehzahlregelung für die elektrische Maschine 2 aus Fig. 3 ergibt. Bei der Drehzahlregelung der elektrischen Maschine 2 im Drehzahlregelbetrieb wird gemäß Fig. 3 eine Istdrehzahl n_{IST} der elektrischen Maschine 2 mit einer Solldrehzahl n_{SOLL} verglichen und eine Regelabweichung einem Drehzahlregler 7 durchgeführt, der als Stellgröße für die elektrische Maschine 2 ein Drehmoment ausgibt.

Dieses vom Drehzahlregler 7 ausgegebene Drehmoment wird mit einem Vorsteuermoment M_{VOR} verrechnet, wobei es sich bei diesem Vorsteuermoment im Drehzahlregelbetrieb um das Moment des Anfahrelements 6 handelt.

In diesem Fall wird nach dem Haften des Anfahrelements 6 die elektrische Maschine 2 vom Drehzahlregelbetrieb in einen Drehmomentregelbetrieb überführt und das Anfahren bei geschlossenem Anfahrelement 6 fortgesetzt.

In dem Fall, in welchem der Antriebsstrang gemäß Fig. 1 zusätzlich zur elektrischen Maschine 2 über einen Verbrennungsmotor 1 verfügt, wird der beim Anfahren zu erwartende Fahrwiderstand mit zwei Grenzwerten verglichen, nämlich mit dem bereits erwähnten ersten Grenzwert und einem zweiten Grenzwert, der größer als der erste Grenzwert ist. Ist in diesem Fall der zu erwartende Fahrwiderstand nicht nur größer als der erste Grenzwert, sondern vielmehr auch größer als der zweite Grenzwert, so wird zum Anfahren bei geöffnetem Anfahrelement 6 die elektrische Maschine 2 im Drehzahlregelbetrieb mit einer definierten Maschinendrehzahl betrieben und anschließend wird das Anfahrelement 6 geschlossen, sodass dasselbe ein Anfahrelement überträgt, wobei zusätzlich der Verbrennungsmotor 1 über die im Schlupf betriebene Kupplung 5, die zwischen den Verbrennungsmotor 1 und die elektrische Maschine 2 geschaltet ist, ein zusätzliches Anfahrelement überträgt. In diesem Fall ist das Vorsteuermoment M_{VOR} für die Drehzahlregelung der elektrischen Maschine 2 sowohl vom Moment des Anfahrelements 6 als auch vom Moment der zwischen den Verbrennungsmotor 1 und der elektrischen Maschine 2 geschalteten Kupplung 5 abhängig. Ferner wird in diesem Fall eine Reibarbeit zwischen der Kupplung 5 und dem Anfahrelement 6 aufgeteilt. An der Kupplung 5 liegt bedingt durch das schlupfende Anfahrelement 6 eine geringere Differenzdrehzahl an als dann, wenn das Anfahrelement 6 vollständig geschlossen wäre. Das Anfahrelement 6 verrichtet geringere Reibarbeit als in dem Fall, in welchem die Kupplung 5 geschlossen wäre.

Das Anfahrelement 6 überträgt zwar ein identisches Moment, demselben stellt sich jedoch bei schlupfender Kupplung 5 eine geringere Differenzdrehzahl ein.

Dann, wenn beim Antriebsstrang der Fig. 1 der beim Anfahren zu erwartende Fahrwiderstand größer als der erste Grenzwert, jedoch kleiner als der zweite Grenzwert ist, wird zum Anfahren bei ausgeschaltetem Verbrennungsmotor 1, bei geöffneter Kupplung 5 und bei geöffnetem Anfahrelement 6 die elektrische Maschine 2 zunächst auf eine definierte Maschinendrehzahl im Drehzahlregelbetrieb gebracht und anschließend das Anfahrelement 6 derart geschlossen, dass dasselbe ein gewünschtes Anfahrelement überträgt, wobei hierbei überwacht wird, ob das Kraftfahrzeug nach einer definierten Zeitspanne anfährt. Dann, wenn hierbei festgestellt wird, dass das Kraftfahrzeug nicht anfährt, wird der Anfahrvorgang abgebrochen und ein neuer Anfahrvorgang mit den Maßnahmen durchgeführt, die dann zum Einsatz kommen, wenn der zu erwartende Fahrwiderstand größer als der zweite Grenzwert ist.

Dann, wenn im Fall des Antriebsstrangs der Fig. 1 der zu erwartende Fahrwiderstand sowohl kleiner als der zweite Grenzwert als auch kleiner als der erste Grenzwert ist, wird, wie bereits erwähnt, das Anfahren bei ausgeschaltetem Verbrennungsmotor 1, bei geöffneter Kupplung 5 und bei geschlossenem Anfahrelement 6 über die elektrische Maschine 2 aus dem Stillstand desselben heraus durchgeführt, wobei dann überwacht wird, ob nach einer definierten Zeitspanne die elektrische Maschine 2 die Mindestdrehzahl erreicht hat. Wird hierbei festgestellt, dass die elektrische Maschine 2 die Mindestdrehzahl nicht erreicht hat, so wird der Anfahrvorgang abgebrochen und ein neuer Anfahrvorgang durchgeführt, und zwar entweder mit Maßnahmen, die dann zum Einsatz kommen, wenn der zu erwartende Fahrwiderstand größer als der erste Grenzwert jedoch kleiner als der zweite Grenzwert ist, oder mit Maßnahmen, die dann zum Einsatz kommen, wenn der zu erwartende Fahrwiderstand größer als der zweite Grenzwert ist.

Die Erfindung verfügt über eine Vielzahl von Vorteilen. So kann stets ein sicheres Anfahren eines Kraftfahrzeugs realisiert werden, und zwar ohne die Gefahr einer Überlastung und damit Beschädigung einer als Drehstrom-Synchronmaschine ausgebildeten elektrischen Maschine. Darüberhinaus kann das maximal bereitstellbare Drehmoment der elektrischen Maschine 2 immer voll ausgeschöpft werden. Das Anfahrelement, welches als getriebeinternes oder getriebeexternes Anfahrelement 6 ausgebildet sein kann, unterliegt nur einer geringen Belastung und damit einem geringen Verschleiß. Es wird nur dann über ein schlupfendes, getriebeinternes oder getriebeexternes Anfahrelement 6 angefahren, wenn der beim Anfahren zu erwartende Fahrwiderstand größer als der erste Grenzwert ist. Dahingegen, wenn der zu erwartende Fahrwiderstand kleiner als dieser Grenzwert ist, bleibt das Anfahrelement 6 geschlossen und wird daher nicht belastet.

### Bezugszeichen

- 1: Verbrennungsmotor
- 2: elektrische Maschine
- 3: Abtrieb
- 4: Getriebe
- 5: Kupplung
- 6: Anfahrelement
- 7: Drehzahlregler

## Patentansprüche

1. Verfahren zum Betreiben eines Antriebsstrangs eines Kraftfahrzeugs, wobei der Antriebsstrang ein zumindest eine elektrische Maschine (2), umfassendes Antriebsaggregat und ein zwischen das Antriebsaggregat und einen Abtrieb (3) geschaltetes Getriebe (4) aufweist, wobei zwischen der elektrischen Maschine (2) und das Getriebe (4) ein getriebeexternes oder ein getriebeinternes Anfahrelement (6) geschaltet ist, wobei zum Anfahren ein beim Anfahren zu erwartender Fahrwiderstand ermittelt wird, wobei dann, wenn der zu erwartende Fahrwiderstand kleiner als ein erster Grenzwert ist, das Anfahren bei geschlossenem, getriebeextemem oder getriebeintemem Anfahrelement (6) über die elektrische Maschine (2) aus dem Stillstand desselben heraus erfolgt, **dadurch gekennzeichnet, dass** dann, wenn der zu erwartende Fahrwiderstand größer als der erste Grenzwert ist, zum Anfahren bei geöffnetem, getriebeextemem oder getriebeintemem Anfahrelement (6) die elektrische Maschine (2) mit einer definierten Maschinendrehzahl im Drehzahlregelbetrieb betrieben und anschließend das getriebeexteme oder getriebeinterne Anfahrelement (6) derart geschlossen wird, dass dasselbe ein vom Fahrerwunsch abhängiges Anfahrmoment überträgt.

2. Verfahren nach Anspruch 1, **dadurch gekennzeichnet, dass** dann, wenn der zu erwartende Fahrwiderstand kleiner als der erste Grenzwert ist und das Anfahren bei geschlossenem, getriebeextemem oder getriebeintemem Anfahrelement (6) über die elektrische Maschine (2) aus dem Stillstand desselben heraus erfolgt, überwacht wird, ob nach einer definierten Zeitspanne die elektrische Maschine (2) eine Mindestdrehzahl erreicht, wobei dann, wenn diese Mindestdrehzahl nicht erreicht wird, der Anfahrvorgang abgebrochen und ein neuer Anfahrvorgang mit den Maßnahmen durchgeführt wird, die dann zum Einsatz kommen, wenn der zu erwartende Fahrwiderstand größer als der erste Grenzwert ist.

3. Verfahren nach Anspruch 1 oder 2, **dadurch gekennzeichnet, dass** dann, wenn der zu erwartende Fahrwiderstand größer als der erste Grenzwert ist, zum Anfahren der elektrischen Maschine (2) im Drehzahlregelbetrieb betrieben wird, wobei das Moment des getriebeexternen oder getriebeintemen Anfahrelements (6) ein Vorsteuermoment für den Drehzahlregelbetrieb bestimmt.

4. Verfahren nach einem der Ansprüche 1 bis 3, **dadurch gekennzeichnet, dass** dann, wenn der zu erwartende Fahrwiderstand größer als der erste Grenzwert ist, nach dem Haften des getriebeexternen oder getriebeintemen Anfahrelements (6) die elektrische Maschine (2) vom Drehzahlregelbetrieb in einem Drehmomentregelbetrieb überführt wird.

5. Verfahren nach einem der Ansprüche 1 bis 4, **dadurch gekennzeichnet, dass** dann, wenn das Antriebsaggregat zusätzlich zur elektrischen Maschine (2) einen Verbrennungsmotor (1) umfasst und der zu erwartende Fahrwiderstand größer als ein zweiter Grenzwert ist, der größer als der erste Grenzwert ist, zum Anfahren bei geöffnetem, getriebeextemem oder getriebeintemem Anfahrelement (6) die elektrische Maschine (2) mit einer definierten Maschinendrehzahl im Drehzahlregelbetrieb betrieben und anschließend das getriebeexterne oder getriebeinterne Anfahrelement (6) derart geschlossen wird, dass dasselbe ein Anfahrmoment überträgt, wobei der Verbrennungsmotor (1) über eine im Schlupf betriebene Kupplung (5), die zwischen den Verbrennungsmotor (1) und die elektrische Maschine (2) geschaltet ist, ein zusätzliches Anfahrmoment überträgt.

6. Verfahren nach Anspruch 5, **dadurch gekennzeichnet, dass** dann, wenn der zu erwartende Fahrwiderstand größer als der zweite Grenzwert ist, zum Anfahren die elektrische Maschine (2) im Drehzahlregelbetrieb betrieben wird, wobei das Moment des getriebeexternen oder getriebeinternen Anfahrelements (6) und das Moment der zwischen den Verbrennungsmotor (1) und die elektrische Maschine (2) geschalteten Kupplung (5) ein Vorsteuermoment für den Drehzahlregelbetrieb bestimmt.

7. Verfahren nach Anspruch 5 oder 6, **dadurch gekennzeichnet, dass** dann, wenn der zu erwartende Fahrwiderstand größer als der erste Grenzwert und kleiner als der zweite Grenzwert ist, zum Anfahren bei ausgeschaltetem Verbrennungsmotor (1), bei geöffneter, zwischen den Verbrennungsmotor (1) und die elektrische Maschine (2) geschalteter Kupplung (5) und bei geöffnetem, getriebeexternem oder getriebeintemem Anfahrelement (6) die elektrische Maschine (2) mit einer definierten Maschinendrehzahl im Drehzahlregelbetrieb betrieben und anschließend das getriebeexteme oder getriebeinterne Anfahrelement (6) derart geschlossen wird, dass dasselbe ein Anfahrmoment überträgt, wobei überwacht wird, ob das Kraftfahrzeug nach einer definierten Zeitspanne anfährt, und dass dann, wenn hierbei festgestellt wird, dass das Kraftfahrzeug nicht anfährt, der Anfahrvorgang abgebrochen und ein neuer Anfahrvorgang mit den Maßnahmen durchgeführt wird, die dann zum Einsatz kommen, wenn der zu erwartende Fahrwiderstand größer als der zweite Grenzwert ist.

8. Verfahren nach einem der Ansprüche 5 bis 7, **dadurch gekennzeichnet, dass** dann, wenn dann, wenn der zu erwartende Fahrwiderstand kleiner als der erste Grenzwert ist, das Anfahren bei ausgeschaltetem Verbrennungsmotor (1), bei geöffneter, zwischen den Verbrennungsmotor (1) und die elektrische Maschine (2) geschalteter Kupplung (5) und bei geschlossenem, getriebeexternem oder getriebeintemem Anfahrelement (6) über die elektrische Maschine (2) aus dem Stillstand desselben heraus erfolgt, wobei überwacht wird, ob nach einer definierten Zeitspanne die elektrische Maschine (2) eine Mindestdrehzahl erreicht, wobei dann, wenn diese Mindestdrehzahl nicht erreicht wird, der Anfahrvorgang abgebrochen und ein neuer Anfahrvorgang mit den Maßnahmen durchgeführt wird, die dann zum Einsatz kommen, wenn der zu erwartende Fahrwiderstand größer als der erste Grenzwert jedoch kleiner als der zweite Grenzwert ist, oder die dann zum Einsatz kommen, wenn der zu erwartende Fahrwiderstand größer als der zweite Grenzwert ist.

## Claims

1. Method for operating a drive train of a motor vehicle, wherein the drive train has a drive unit which comprises at least an electric machine (2), and a transmission (4) which is connected between the drive unit and an output (3), wherein a starting element (6) which is external to the transmission or internal to the transmission is connected between the electric machine (2) and the transmission (4), wherein for the purpose of starting a driving resistance which is to be expected during starting is determined, wherein when the driving resistance which is to be expected is smaller than a first limiting value, in the case of a closed starting element (6) which is external to the transmission or internal to the transmission, the starting is carried out from the stationary state of said starting element (6) by means of the electric machine (2), **characterized in that** when the driving resistance which is to be expected is larger than the first limiting value, for the purpose of starting in the case of an opened starting element (6) which is external to the transmission or internal to the transmission the electric machine (2) is operated with a defined machine rotational speed in the rotational speed control mode, and subsequently the starting element (6) which is external to the transmission or internal to the transmission is closed in such a way that said starting element (6) transmits a starting torque which is dependent on the driver's request.

2. Method according to Claim 1, **characterized in that** when the driving resistance which is to be expected is smaller than the first limiting value and, in the case of a closed starting element (6) which is external to the transmission or internal to the transmission, the starting is carried out from the stationary state of said starting element (6) by means of the electric machine (2), it is monitored whether after a defined time period the electric machine (2) reaches a minimum speed, wherein when this minimum rotational speed is not reached, the starting process is aborted and a new starting process is carried out without the measures which are used when the driving resistance which is to be expected is larger than the first limiting value.

3. Method according to Claim 1 or 2, **characterized in that** when the driving resistance which is to be expected is larger than the first limiting value, for the purpose of starting the electric machine (2) is operated in the rotational speed control mode, wherein the torque of the starting element (6) which is external to the transmission or internal to the transmission determines a pilot control torque for the rotational speed control mode.

4. Method according to one of Claims 1 to 3, **characterized in that** when the driving resistance which is to be expected is larger than the first limiting value, after the starting element (6) which is external to the transmission or internal to the transmission grips the electric machine (2) is transferred from the rotational speed control mode into a torque control mode.

5. Method according to one of Claims 1 to 4, **characterized in that** when the drive unit comprises an internal combustion engine (1) in addition to the electric machine (2) and the driving resistance which is to be expected is larger than a second limiting value which is larger than the first limiting value, for the purpose of starting in the case of an open starting element (6) which is external to the transmission or internal to the transmission the electric machine (2) is operated at a defined machine rotational speed in the rotational speed control mode and subsequently the starting element (6) which is external to the transmission or internal to the transmission is closed in such a way that said starting element (6) transmits a starting torque, wherein the internal combustion engine (1) transmits an additional starting torque via a clutch (5) which is operated in the slipping state and is connected between the internal combustion engine (1) and the electric machine (2) .

6. Method according to Claim 5, **characterized in that** when the driving resistance which is to be expected is larger than the second limiting value, for the purpose of starting the electric machine (2) is operated in the rotational speed control mode, wherein the torque of the starting element (6) which is external to the transmission or internal to the transmission and the torque of the clutch (5) which is connected between the internal combustion engine (1) and the electric machine (2) determine a pilot control torque for the rotational speed control mode.

7. Method according to Claim 5 or 6, **characterized in that** when the driving resistance which is to be expected is larger the first limiting value and smaller than the second limiting value, for the purpose of starting in the case of an internal combustion engine (1) which is switched off, in the case of opened clutch (5) which is connected between the internal combustion engine (1) and the electric machine (2) and in the case of opened starting element (6) which is external to the transmission or internal to the transmission the electric machine (2) is operated at a defined machine rotational speed in the rotational speed control mode and subsequently the starting element (6) which is external to the transmission or internal to the transmission is closed in such a way that said starting element (6) transmits a starting torque, wherein it is monitored whether the motor vehicle starts after a defined time period and **in that** when it is detected here that the motor vehicle does not start the starting process is aborted and a new starting process is carried out with the measures which are used when the driving resistance which is to be expected is larger than the second limiting value.

8. Method according to one of Claims 5 to 7, **characterized in that** when the driving resistance which is to be expected is smaller the first limiting value, the starting in the case of a switched-off internal combustion engine (1) in the case of an opened clutch (5) which is connected between the internal combustion engine (1) and the electric machine (2) and in the case of a closed starting element (6) which is external to the transmission or internal to the transmission is carried out from the stationary state of said starting element (6) by means of the electric machine (2), wherein it is monitored whether after a defined time period the electric machine (2) reaches a minimum rotational speed, wherein, when this minimum rotational speed is not reached, the starting process is aborted and a new starting process is carried out with the measures which are used when the driving resistance which is to be expected is larger than the first limiting value but smaller than the second limiting value or which are used when the driving resistance which is to be expected is larger than the second limiting value.

## Revendications

1. Procédé permettant de faire fonctionner une chaîne cinématique de véhicule automobile, la chaîne cinématique comportant un groupe d'entraînement comprenant au moins un moteur électrique (2) ainsi qu'une boîte de vitesses (4) connectée entre le groupe d'entraînement et un entraînement en sortie (3), un élément de démarrage (6) externe à la boîte de vitesses ou interne à la boîte de vitesses étant connecté entre le moteur électrique (2) et la boîte de vitesses (4), une résistance à la conduite attendue lors du démarrage étant calculée pour réaliser le démarrage, le démarrage se produisant avec un élément de démarrage (6) fermé, externe à la boîte de vitesses ou interne à la boîte de vitesses via le moteur électrique (2) à partir de l'arrêt de ce dernier lorsque la résistance à la conduite attendue est inférieure à une première valeur limite, **caractérisé en ce que** lorsque la résistance à la conduite attendue est supérieure à la première valeur limite, le moteur électrique (2) est entraîné à une vitesse de rotation du moteur définie dans le mode de régulation de la vitesse de rotation pour réaliser un démarrage avec un élément de démarrage (6) externe à la boîte de vitesses ou interne à la boîte de vitesses ouvert puis que l'élément de démarrage (6) externe à la boîte de vitesses ou interne à la boîte de vitesses est fermé de telle sorte qu'il transmet un couple de démarrage dépendant d'un souhait du conducteur.

2. Procédé selon la revendication 1, **caractérisé en ce que** lorsque la résistance à la conduite attendue est inférieure à la première valeur limite et que le démarrage est effectué avec un élément de démarrage (6) externe à la boîte de vitesses ou interne à la boîte de vitesses fermé par le biais du moteur électrique (2) à partir de l'arrêt de celui-ci, on surveille si après un intervalle de temps défini, le moteur électrique (2) atteint une vitesse de rotation minimale, le processus de démarrage étant interrompu si cette vitesse de rotation minimale n'est pas atteinte et un nouveau processus de démarrage est mis en oeuvre en mettant en place les mesures utilisées lorsque la résistance à la conduite attendue est supérieure à la première valeur limite.

3. Procédé selon la revendication 1 ou 2, **caractérisé en ce que** lorsque la résistance à la conduite attendue est supérieure à la première valeur limite, le moteur électrique (2) est entraîné dans le mode de régulation de la vitesse de rotation pour le démarrage, le couple de l'élément de démarrage (6) externe à la boîte de vitesses ou interne à la boîte de vitesses définissant un couple de précommande prévu pour le mode de régulation de la vitesse de rotation.

4. Procédé selon l'une quelconque des revendications 1 à 3, **caractérisé en ce que** lorsque la résistance à la conduite attendue est supérieure à la première valeur limite, le moteur électrique (2) est passé du mode de régulation de la vitesse de rotation dans un mode de régulation du couple de rotation après l'adhérence de l'élément de démarrage (6) externe à la boîte de vitesses ou interne à la boîte de vitesses.

5. Procédé selon l'une quelconque des revendications 1 à 4, **caractérisé en ce que** lorsque le groupe d'entraînement comprend un moteur à combustion interne (1) en sus du moteur électrique (2) et que la résistance à la conduite attendue est supérieure à une deuxième valeur limite supérieure à la première valeur limite, le moteur électrique (2) est entraîné à une vitesse de rotation du moteur définie dans le mode de régulation de la vitesse de rotation pour réaliser le démarrage avec l'élément de démarrage (6) externe à la boîte de vitesses ou interne à la boîte de vitesses ouvert puis que l'élément de démarrage (6) externe à la boîte de vitesses ou interne à la boîte de vitesses est fermé de façon à transmettre un couple de démarrage, le moteur à combustion interne (1) transmettant un couple de démarrage supplémentaire par le biais d'un embrayage (5) entraîné en patinage connecté entre le moteur à combustion interne (1) et le moteur électrique (2).

6. Procédé selon la revendication 5, **caractérisé en ce que** lorsque la résistance à la conduite attendue est supérieure à la deuxième valeur limite, le moteur électrique (2) est entraîné dans le mode de régulation de la vitesse de rotation pour réaliser le démarrage, le couple de l'élément de démarrage (6) externe à la boîte de vitesses ou interne à la boîte de vitesses et le couple de l'embrayage (5) connecté entre le moteur à combustion interne (1) et le moteur électrique (2) définissant un couple de précommande pour le mode de régulation de la vitesse de rotation.

7. Procédé selon la revendication 5 ou 6, **caractérisé en ce que** lorsque la résistance à la conduite attendue est supérieure à la première valeur limite et inférieure à la deuxième valeur limite, le moteur électrique (2) est entraîné à une vitesse de rotation du moteur définie dans le mode de régulation de la vitesse de rotation pour réaliser le démarrage lorsque le moteur à combustion interne (1) est déconnecté, lorsque l'embrayage (5) connecté entre le moteur à combustion interne (1) et le moteur électrique (2) est ouvert et lorsque l'élément de démarrage (6) externe à la boîte de vitesses ou interne à la boîte de vitesses est ouvert puis que l'élément de démarrage (6) externe à la boîte de vitesses ou interne à la boîte de vitesses est fermé de façon à transmettre un couple de démarrage, avec une surveillance de si le véhicule automobile démarre après un intervalle de temps défini et que lorsque l'on détecte que le véhicule automobile ne démarre pas, le processus de démarrage est interrompu et un nouveau processus de démarrage est réalisé en mettant en place des mesures lorsque la résistance à la conduite attendue est supérieure à la deuxième valeur limite.

8. Procédé selon l'une quelconque des revendications 5 à 7, **caractérisé en ce que** lorsque la résistance à la conduite attendue est inférieure à la première valeur limite, le démarrage se produit via le moteur électrique (2) à partir de l'état arrêté de celui-ci, lorsque le moteur à combustion interne (1) est déconnecté, lorsque l'embrayage (5) connecté entre le moteur à combustion interne (1) et le moteur électrique (2) est ouvert et lorsque l'élément de démarrage (6) externe à la boîte de vitesses ou interne à la boîte de vitesses est fermé, avec une surveillance de si le moteur électrique (2) atteint une vitesse de rotation minimale après un intervalle de temps défini, le processus de démarrage étant interrompu lorsque cette vitesse de rotation minimale n'est pas atteinte et un nouveau processus de démarrage est réalisé avec les mesures utilisées lorsque la résistance à la conduite attendue est supérieure à la première valeur limite mais inférieure à la deuxième valeur limite ou utilisées lorsque la résistance à la conduite attendue est supérieure à la deuxième valeur limite.
